# EUROPÄISCHE PATENTSCHRIFT

(11) **EP 0 911 538 B1**
(45) Veröffentlichungstag und Bekanntmachung des Hinweises auf die Patenterteilung: **06.08.2003**
(21) Anmeldenummer: 98250356.7
(22) Anmeldetag: 07.10.1998
(51) Int. Cl.: F16G 13/06, F16G 13/16

(54) **Flyerkette**
Flyer chain
Chaîne flyer

(30) Priorität: 21.10.1997 DE 29719288 U
(43) Veröffentlichungstag der Anmeldung: 28.04.1999
(73) Patentinhaber: Arnold & Stolzenberg GmbH, 37557 Einbeck (DE)
(72) Erfinder: Vogt, Erhard, 37574 Einbeck (DE)
(74) Vertreter: Pfenning, Meinig & Partner

(56) Entgegenhaltungen:
- EP-A- 0 459 104
- DE-A- 3 602 642
- DE-U- 29 719 288
- FR-A- 2 332 929
- GB-A- 742 767

## Beschreibung

Die vorliegende Erfindung betrifft eine Flyerkette nach dem Oberbegriff des Hauptanspruches.

Flyerketten dienen der Kraftübertragung und der Kraftumlenkung. Sie werden z.B. als Hubketten, Gegengewichtsketten, Spannketten und Geschirrketten eingesetzt. Ein häufiges Einsatzgebiet sind Hubeinrichtungen für Gabelstapler.

Aus der EP 0 459 104 B1 ist eine Flyerkette mit durch Kettenbolzen gelenkig miteinander verbundenen laschenförmigen Kettengliedern aus Außenlaschen und Zwischenlaschen sowie U-förmigen Laschen mit einer Schutz- und Führungsfläche und zwei mit Bohrungen versehenen Flanschen bekannt. Die aus einem nichtmetallischen Material gefertigten U-förmigen Laschen dienen dem Schutz benachbarter Gegenstände wie z.B. Hydraulikzylindern und besonders dem Schutz an der Flyerkette anliegender Schläuche. Bei häufigem Kontakt mit umgebenden Bauteilen können die U-förmigen Laschen jedoch einem hohen Verschleiß unterliegen. Nach der EP 0 459 104 B1 sind die U-förmigen Laschen jedoch nur mit einfachen Durchgangsbohrungen versehen und werden wie die Laschen der Kettenglieder auf den Kettenbolzen angeordnet. Es ist keine Vorrichtung zur einfachen Montage bzw. zum schnellen und leichten Auswechseln verschlissener U-förmiger Laschen vorgesehen. Dies hat den Nachteil, daß die Schutzfunktion der Kette im Praxisbetrieb eingeschränkt sein kann, da verschlissene U-förmige Laschen nicht rechtzeitig ausgewechselt werden.

Weiterhin ist aus der GB-A-742 767 eine Flyerkette bekannt, die durch Kettenbolzen gelenkig miteinander verbundene laschenförmige Kettenglieder aus Außenlaschen und Zwischenlaschen sowie U-förmigen Laschen mit einer Schutz- und Führungsfläche und zwei mit Bohrungen versehenen Flanschen aufweist, wobei die U-förmigen Laschen auf einer Seite mittels einer Schnappverbindung auf dem Kettenbolzen befestigt sind. Auf der anderen Seite ist ein die U-förmigen Laschen um- bzw. durchgreifendes Schnappelement vorgesehen, das in Längsrichtung der Kette zwischen zwei Kettenbolzen auf eine Außenlasche aufgeschnappt ist.

Schließlich zeigt die FR-A-2332 929 eine Gliederkette, bei der U-förmige Laschen auf jeweils zwei Kettenbolzen mittels Schnappverbindungen derart befestigt sind, daß die Kettenbolzen an beiden Enden in Bohrungen der U-förmigen Laschen eingreifen.

Ausgehend von der GB-A-742 767 liegt der vorliegenden Erfindung die Aufgabe zugrunde, die Anzahl der für die Schnappverbindung benötigten Teile zu verringern und weiterhin die Montage der U-förmigen Laschen zu erleichtern.

Diese Aufgabe wird durch eine Flyerkette nach Anspruch 1 gelöst.

Dadurch, daß bei einer Flyerkette nach dem Oberbegriff des Hauptanspruchs zur Herstellung der Schnappverbindung der Kettenbolzen an beiden Enden in die Bohrungen eingreift und die freien Enden der Flansche bis zum Bereich der Bohrungen in Längsrichtung der Flyerkette gesehen eine Einlaufschräge aufweisen, wobei in Seitenansicht auf die Flyerkette die Breite der Einlaufschräge vom freien Ende der Flansche zum Bereich der Bohrungen hin abnimmt, wird ein besonderes Schnappelement zur Befestigung der U-förmigen Lasche nicht benötigt. Dies garantiert kurze Stillstandszeiten beim Austausch verschlissener U-förmiger Laschen, einen verminderten Werkzeugbedarf bei der Montage bzw. Demontage sowie einen dauerhaften Schutz, da einzelne geborstene U-förmige Laschen auch von ungeschultem Personal während des Praxisbetriebs schnell ausgewechselt werden können. Diese Vorteile schlagen sich in verringerten Betriebskosten nieder.

Eine vorteilhafte Ausführungsform sieht vor, daß die Flansche der U-förmigen Laschen im eingeschnappten Zustand an ihren freien Enden die Flyerkette überragen. Dies gewährleistet zum einen bessere Hebelverhältnisse beim Spreizen der U-förmigen Laschen zu deren Demontage, zum anderen wird damit ein sehr umfassender Schutz umgebender Bauteile, wie z.B. Hydraulikzylindern, durch die U-förmigen Laschen erreicht.

Eine besonders bevorzugte Ausführungsform sieht vor, daß die Flansche in dem Bereich, der im eingeschnappten Zustand die Flyerkette überragt, Verstärkungen aufweisen und daß die U-förmigen Laschen im Bereich des Übergangs von der Schutz- und Führungsfläche zu den Flanschen auf der Innenseite Einkerbungen aufweisen. Hiermit wird gewährleistet, daß die Flansche zu ihren freien Enden (hier ist Biegung unerwünscht) hin besonders biegesteif ausgestaltet sind und an dem Ort, an dem die Biegung gewünscht wird (dem Übergang von der Schutz- und Führungsfläche zu den Flanschen) weniger biegesteif ausgestaltet sind.

Außerdem sieht eine weitere vorteilhafte Ausführungsform vor, daß eine im Bereich der Schutz- und Führungsflächen zwischen den gegenüberliegenden Flanschen, also quer zur Längsrichtung der Flyerkette, verlaufende Verstärkungsrippe vorgesehen ist. Diese dient der verbesserten Verwindungssteifigkeit der U-förmigen Lasche und damit einem dauerhafteren definierten Sitz der U-förmigen Lasche auf den Kettenbolzen.

Eine besonders vorteilhafte Ausführungsform sieht vor, daß die U-förmigen Laschen aus Kunststoff bestehen. Hierdurch kann eine ausreichend hohe Schlagzähigkeit und Elastizität der U-förmigen Laschen erreicht werden, ohne den gewünschten Schutz umliegender Bauteile zu vermindern.

Weitere vorteilhafte Weiterbildungen der Erfindung sind in den weiteren Unteransprüchen angegeben.

Ein Ausführungsbeispiel der vorliegenden Erfindung wird anhand der Figuren erläutert. Es zeigen:
- Fig. 1: Schnitt durch eine erfindungsgemäße Flyerkette mit aufgesetzter U-förmiger Lasche und anliegenden Schläuchen,
- Fig. 2: eine teilweise geschnittene Ansicht einer U-förmigen Lasche,
- Fig. 3: eine weitere teilweise geschnittene Ansicht einer U-förmigen Lasche, und

- Fig. 4: eine Gesamtansicht einer erfindungsgemäßen Flyerkette mit aufgesetzten U-förmigen Laschen, und
- Fign. 5 und 6: Ansichten bzw. Teilschnitte einer weiteren Ausführungsform einer U-förmigen Lasche.

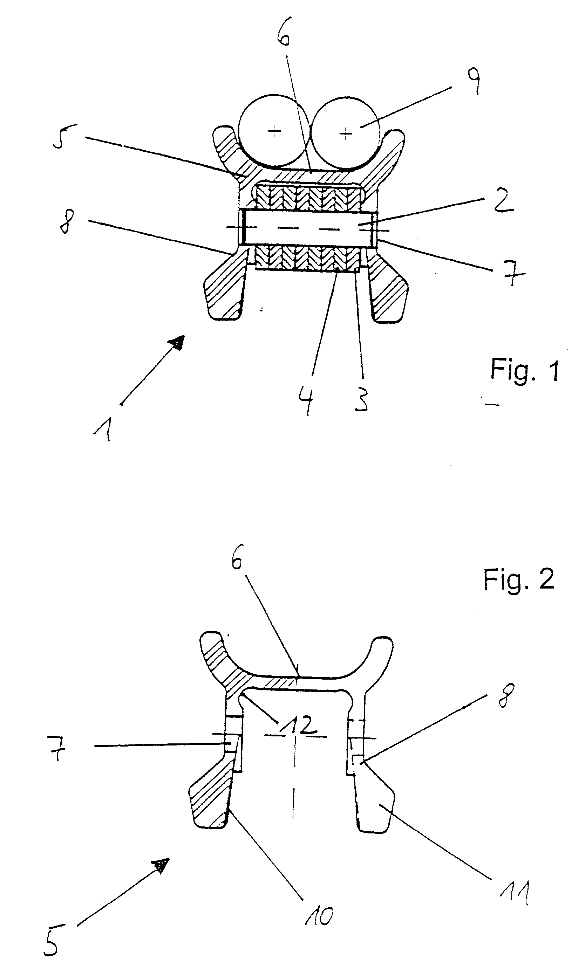

Fig. 1 zeigt eine erfindungsgemäße Flyerkette 1 mit einem Kettenbolzen 2, auf dem Zwischenlaschen 4 mit Lossitz und Außenlaschen 3 mit Preßpassung angeordnet sind. Der Kettenbolzen 2 greift teilweise in Bohrungen 7 der U-förmigen Lasche 5 ein. In der vorliegenden Ausführungsform sind die Enden der Kettenbolzen 2 vollkreisförmig und überragen die Außenlaschen 3 in einer Weise, daß der U-förmigen Lasche 5 eine ausreichend große Fläche zur Befestigung zur Verfügung steht. Es sind darüber hinaus jedoch auch andere Ausführungsformen denkbar, zum Beispiel solche, in denen die Enden der Kettenbolzen 2 keinen Vollkreisquerschnitt, sondern lediglich Kreissegmente aufweisen. Die U-förmige Lasche 5 verfügt über eine Schutz- und Führungsfläche 6 sowie zwei Flansche 8. Auf der Schutz- und Führungsfläche 6, die in Querrichtung zur Flyerkette 1 einen wannenförmigen Querschnitt aufweist, sind Schläuche 9 geführt. Die Flansche 8 überragen an ihren freien enden die Außenlaschen 3 und Zwischenlaschen 4 deutlich, so daß einerseits eine möglichst umfassende Abschirmung der (in der Regel metallischen) Außenlaschen 3 und Zwischenlaschen 4 gewährleistet ist und daß außerdem die Demontage der U-förmigen Laschen 5 von dem Kettenbolzen 2 dadurch erleichtert wird, daß ein längerer Hebelweg sowie eine größere Angriffsfläche zum Spreizen der Flansche 8 gegeben ist. Als bevorzugtes Material für die U-förmigen Laschen 5 kommen geeignete Kunststoffe zum Einsatz. Diese minimieren die Gefahr von mechanischen Beschädigungen benachbarter Gegenstände und weisen außerdem eine ausreichende Elastizität sowie eine hohe Schlagzähigkeit auf.

Fig. 2 zeigt deutlich, daß die freien Enden der Flansche 8 Verstärkungen 11 aufweisen, die eine höhere Biegefestigkeit der Flansche 8 in diesem Bereich gewährleisten. Hiermit wird sichergestellt, daß beim Auseinanderbiegen der Flansche 8 (etwa bei der Demontage) die Verformung nicht an ungewünschten Stellen auftritt. Dagegen sind im Bereich des Übergangs von der Schutz- und Führungsfläche 6 zu den Flanschen 8 Einkerbungen 12 vorgesehen, die das Spreizen der Flansche 8 erleichtern. Außerdem ist eine Einlaufschräge 10 gezeigt, die sich vom freien Ende der Flansche 8 bis zum Bereich der Bohrungen 7 erstreckt. Dadurch, daß zwei sich gegenüberliegende Einlaufschrägen 10 mit zu der Schutz- und Führungsfläche 6 hin voneinander geringer werdendem Abstand zulaufen, wird die Montage der U-förmigen Laschen 5 erhebliche erleichtert. Es ist möglich, durch Druck auf die Schutz- und Führungsfläche 6 die U-förmige Lasche 5 auf den Kettenbolzen zu fixieren, ohne daß erhebliche Kräfte zum Spreizen der Flansche 8 notwendig werden. Die U-förmigen Laschen 5 sind so konzipiert, daß die Flansche 8 im eingebauten Zustand von den Außenlaschen 3 leicht gespreizt werden und damit einen definierten Sitz aufweisen.

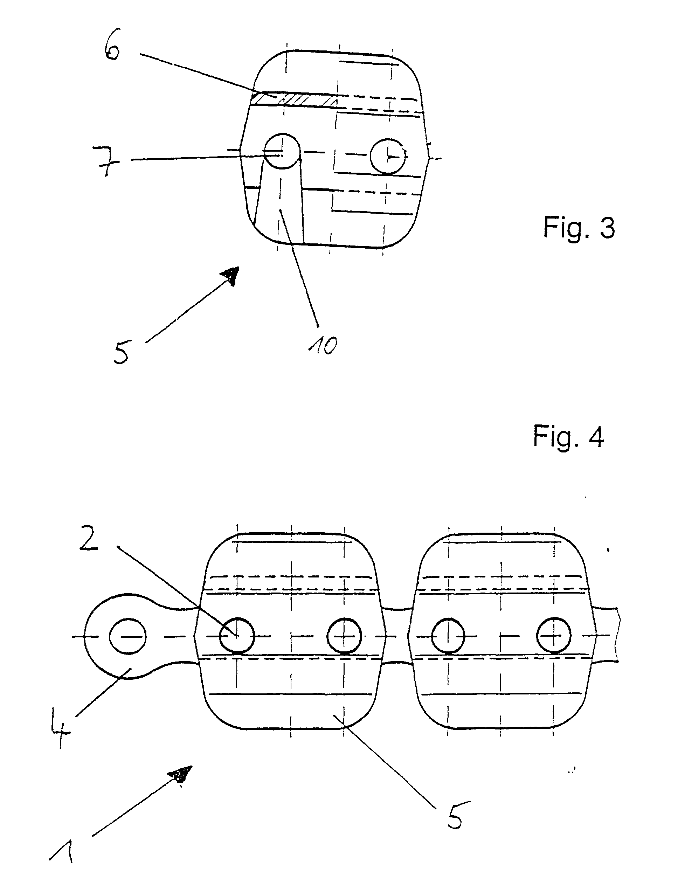

Fig. 3 zeigt einen Teilschnitt der U-förmigen Lasche 5 in Längsrichtung, die zusammen mit den oben beschriebenen Figuren die genaue Geometrie der Einlaufschräge 10 offenbart. Es zeigt sich, daß die Breite der Einlaufschräge 10 vom freien Ende der Flansche 8 zu der Schutz- und Führungsfläche 6 hin geringer wird. Dies ermöglicht zusätzlich zu der oben beschriebenen Erleichterung bei der Montage eine weitere Vereinfachung durch Selbstzentrierung der U-förmigen Lasche 5 bei Druck auf die Schutz- und Führungsfläche 6 zur Montage der U-förmigen Lasche 5 auf einem Kettenbolzen 2. Fig. 3 zeigt außerdem die in Längsrichtung der Kette ebene Form der Schutz- und Führungsfläche 6. Es sind jedoch auch andere Ausführungsformen dieser Fläche denkbar, z.B. konvexe Formen, um etwa beim Umlenken der Flyerkette 1 ein besseres Anliegen der Schläuche 9 an der Flyerkette 1 zu erzielen. Es ist jedoch in jedem Fall zu beachten, daß die Kanten der Schutz- und Führungsfläche 6 gerundet sind. Dies gilt auch, mit Ausnahme des Bereichs der Bohrungen 7, für alle übrigen Ecken und Kanten der U-förmigen Lasche 5. Mit der Abrundung wird die Verletzungsgefahr verringert und die Beschädigung des Schlauches 9 bzw. benachbarter Gegenstände, etwa dem Hydraulikzylinder eines Gabelstaplers etc., weitgehend vermieden.

Fig. 4 zeigt eine Gesamtansicht einer Flyerkette 1 mit aufgesetzten U-förmigen Laschen 5, die aufzeigt, in welcher Weise in diesem Ausführungsbeispiel jeweils eine U-förmige Lasche 5 auf zwei Kettenbolzen 2 befestigt ist. Es ist außerdem zu erkennen, daß die U-förmigen Laschen 5 die Außenlaschen 3 und Zwischenlaschen 4 in alle Richtungen fast vollständig abschirmen, um den Schutz benachbarter Gegenstände vor dem Kontakt mit den Außenlaschen 3 und Zwischenlaschen 4 zu gewährleisten.

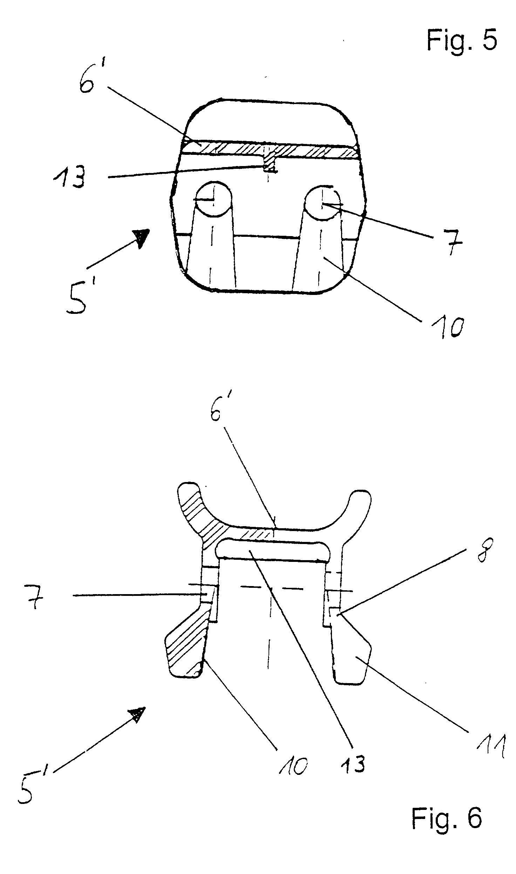

Fign. 5 und 6 zeigen ein weiteres Ausführungsbeispiel einer erfindungsgemäßen U-förmigen Lasche 5', welche mit den oben gezeigten Formen weitgehend identisch ist (mit den Fign. 1 bis 4 übereinstimmende Bezugszeichen bezeichnen jeweils identische Bauteile). Fig. 5 zeigt einen Schnitt und Fig. 6 eine teilweise geschnittene Ansicht der Lasche 5.

Wie die oben gezeigten Ausführungsformen auch, weist jede U-förmige Lasche 5' jeweils 2 x 2 gegenüberliegende Bohrungen 7 auf, wobei jeweils zwei gegenüberliegende Bohrungen fluchtend sind und auf jeweils einem Kettenbolzen 2 fixiert werden. Somit kann eine U-förmige Lasche auf zwei benachbarte Kettenbolzen aufgeschnappt werden.

An die Schutz- und Führungsfläche 6' schließt sich in zu der den Bohrungen 7 mm orientierten Richtung eine Verstärkungsrippe 13 an, welche im Wesentlichen parallel zu den Kettenbolzen 2, also in Querrichtung der Flyerkette 1 verläuft. Die Verstärkungsrippe 13, welche die beiden gegenüberliegenden Flansche 8 verbindet, ist im Wesentlichen quaderförmig ausgeführt, wobei die Stirnflächen des Quaders sich jeweils an die gegenüberliegenden Flansche 8 anschließen und eine Seitenfläche des Quaders sich an die Schutz- und Führungsfläche 6' anschließt. Die Verstärkungsrippe 13 verläuft etwa mittig zwischen den benachbarten Kettenbolzen bzw. mittig zwischen zwei benachbarten Bohrungen 7 eines Flansches 8. Die Verstärkungsrippe 13 greift damit in einen Raum ein, der durch die Einschnürung der (in Fign. 5 und 6 nicht dargestellten) Laschen (eine solche Einschnürung ist jedoch am Beispiel einer Zwischenlasche 4 in Fig. 4 zu sehen) zur Verfügung gestellt ist. Hiermit wird eine sehr gute Raumausnutzung erreicht, die Verstärkungsrippe 13, welche der höheren Verwindungssteifigkeit der U-förmigen Lasche 5' und damit einem dauerhafteren definierten Sitz der U-förmigen Lasche 5' auf den Kettenbolzen 2 dient, benötigt daher keine Ausdehnung der Außenabmaße der U-förmigen Lasche.

## Patentansprüche

1. Flyerkette (1) mit durch Kettenbolzen (2) gelenkig miteinander verbundenen laschenförmigen Kettengliedern aus Außenlaschen (3) und Zwischenlaschen (4) sowie U-förmigen Laschen (5) mit einer Schutz- und Führungsfläche (6) und zwei mit Bohrungen (7) versehenen Flanschen (8), wobei die U-förmigen Laschen (5) mittels einer Schnappverbindung auf dem Kettenbolzen (2) befestigt sind, **dadurch gekennzeichnet, daß** zur Herstellung der Schnappverbindung der Kettenbolzen (2) an beiden Enden in die Bohrungen (7) eingreift und die freien Enden der Flansche (8) bis zum Bereich der Bohrungen (7) in Längsrichtung der Flyerkette (1) gesehen eine Einlaufschräge (10) aufweisen, wobei in Seitenansicht auf die Flyerkette (1) die Breite der Einlaufschräge (10) vom freien Ende der Flansche (8) zum Bereich der Bohrungen (7) hin abnimmt.

2. Flyerkette (1) nach Anspruch 1,
**dadurch gekennzeichnet,**
**daß** die Kettenbolzen (2) die Außenlaschen (3) der Flyerkette (1) überragen.

3. Flyerkette (1) nach Anspruch 2,
**dadurch gekennzeichnet,**
**daß** die Kettenbolzen (2) an ihren Enden einen Vollkreisquerschnitt aufweisen.

4. Flyerkette (1) nach einem der vorhergehenden Ansprüche,
**dadurch gekennzeichnet,**
**daß** die Flansche (8) der U-förmigen Laschen (5) im eingeschnappten Zustand an ihren freien Enden die Flyerkette (1) überragen.

5. Flyerkette (1) nach Anspruch 4,
**dadurch gekennzeichnet,**
**daß** die Flansche (8) in dem Bereich, der im eingeschnappten Zustand die Flyerkette (1) überragt, Verstärkungen (11) aufweisen.

6. Flyerkette (1) nach einem der vorhergehenden Ansprüche,
**dadurch gekennzeichnet,**
**daß** die U-förmigen Laschen (5) im Bereich des Übergangs von der Schutz- und Führungsfläche (6) zu den Flanschen (8) auf der Innenseite Einkerbungen (12) aufweisen.

7. Flyerkette (1) nach einem der vorhergehenden Ansprüche,
**dadurch gekennzeichnet,**
**daß** die Schutz- und Führungsflächen (6) der U-förmigen Laschen (5) in Längsrichtung der Flyerkette (1) konvex oder eben geformt sind.

8. Flyerkette (1) nach einem der vorhergehenden Ansprüche,
**dadurch gekennzeichnet,**
**daß** die Schutz- und Führungsflächen (6) der U-förmigen Laschen (5) in Querrichtung zur Flyerkette (1) einen wannenförmigen Querschnitt zur Führung von Schläuchen (9) aufweisen.

9. Flyerkette (1) nach einem der vorhergehenden Ansprüche,
**dadurch gekennzeichnet,**
**daß** die U-förmigen Laschen (5) aus Kunststoff bestehen.

10. Flyerkette (1) nach einem der vorhergehenden Ansprüche,
**dadurch gekennzeichnet,**
**daß** die U-förmigen Laschen (5') im Bereich der Schutz- und Führungsflächen (6') im Wesentlichen in Querrichtung zur Flyerkette (1) verlaufende Verstärkungsrippen (13) aufweisen.

## Claims

1. Flyer chain (1) with tongue-shaped chain links consisting of external tongues (3) and interim tongues (4) as well as U-shaped tongues (5) with a protective and guiding area (6) connected with one another with the aid of chain bolts (2) in a flexible way, and two further flanges (8) equipped with drillings (7), whereby the U-shaped tongues (5) are fixedly connected with the chain bolts (2) with the aid of a snap fitting, **characterised in that** the chain bolts (2) can be inserted at both ends into the drillings (7) for the creation of the snap fitting, and **in that** the free ends of the flange (8) are equipped with an inlet slope (10) that extends towards the area of the drillings (7) in a longitudinal direction corresponding to that of the flyer chain (1), whereby a side view of the flyer chain (1) will display the decreasing width of the inlet slope (10) from the free end of the flange (8) to the area of the drillings (7).

2. Flyer chain (1) according to Claim 1, **characterised in that** the chain bolts (2) project further than the external tongues (3) of the flyer chain (1).

3. Flyer chain (1) according to Claim 2, **characterised in that** the chain bolts (2) incorporate a completely circular cross-sectional profile at their respective ends.

4. Flyer chain (1) according to one of the preceding Claims, **characterised in that** the free ends of the flange (8) of the U-shaped tongues (5) project further than the flyer chain (1) in their snapped-in condition.

5. Flyer chain (1) according to Claim 4, **characterised in that** the flanges (8) incorporate reinforcements (11) in the area in which they project further than the flyer chain (1) whilst in their snapped-in condition.

6. Flyer chain (1) according to one of the preceding Claims, **characterised in that** the U-shaped tongues (8) incorporate notches (12) on their internal surfaces in the transition area between the protective and guiding area (6) and the flanges (8).

7. Flyer chain (1) according to one of the preceding Claims, **characterised in that** the protective and guiding areas (6) of the U-shaped tongues (5) are formed in a convex or an even manner in the longitudinal direction of the flyer chain (1).

8. Flyer chain (1) according to one of the preceding Claims, **characterised in that** the protective and guiding areas (6) of the U-shaped tongues (5) incorporate a sump-shaped cross-sectional profile in a traverse direction in relation to the flyer chain (1) for the routing of hoses (9).

9. Flyer chain (1) according to one of the preceding Claims, **characterised in that** the U-shaped tongues (5) are manufactured from a synthetic material.

10. Flyer chain (1) according to one of the preceding Claims, **characterised in that** the U-shaped tongues (5') in the area of the protective and guiding areas (6') incorporate reinforcement ribs (13) that are orientated substantially in a traverse direction in relation to the flyer chain (1).

## Revendications

1. Chaîne flyer (1) comportant des maillons en forme d'éclisses, qui sont reliés entre eux d'une manière articulée par des tourillons de chaîne (2) et secomposent d'éclisses extérieures (3) et d'éclisses intermédiaires (4) ainsi que d'éclisses en forme de U (5) comportant une surface de protection et de guidage (6) et deux brides (8) pourvues de perçages (7), les éclisses en forme de U (5) étant fixées au tourillon de chaîne (2) au moyen d'une liaison à encliquetage, **caractérisée en ce que** pour la réalisation de la liaison à encliquetage, le tourillon de chaîne (2) s'engage, à ses deux extrémités, dans les perçages (7) et les extrémités libres de la bride (8) possèdent un biseau d'engagement (10) jusque dans la zone des perçages (7), selon la direction longitudinale de la chaîne flyer (1), la largeur du biseau d'engagement (10) diminuant depuis l'extrémité libre de la bride (8) jusque dans la zone des perçages (7), lorsqu'on regarde la chaîne flyer (1) selon une vue en plan.

2. Chaîne flyer (1) selon la revendication 1, **caractérisée en ce que** les tourillons de chaîne (2) font saillie au-delà des éclisses extérieures (3) de la chaîne flyer (1).

3. Chaîne flyer (1) selon la revendication 2, **caractérisée en ce que** les tourillons de chaîne (2) possèdent, sur leurs extrémités, une section transversale circulaire complète.

4. Chaîne flyer (1) selon l'une des revendications précédentes, **caractérisée en ce qu'**à l'état encliqueté les brides (8) des éclisses en forme de U (5) font saillie, par leurs extrémités libres, au-delà de la chaîne flyer (1).

5. Chaîne flyer (1) selon la revendication 4, **caractérisée en ce que** les brides (8) possèdent des éléments de renfort (11) dans la zone qui, à l'état encliqueté, fait saillie au-delà de la chaîne flyer (1).

6. Chaîne flyer (1) selon l'une des revendications précédentes, **caractérisée en ce que** dans la zone de la jonction de la surface de protection et de guidage (6) avec les brides (8), les éclisses en forme de U (5) possèdent des encoches (12) sur le côté intérieur.

7. Chaîne flyer selon l'une des revendications précédentes, **caractérisé en ce que** les surfaces de protection et de guidage (6) des éclisses en forme de U (5) possèdent une forme convexe ou plane dans la direction longitudinale de la chaîne flyer (1).

8. Chaîne flyer (1) selon l'une des revendications précédentes, **caractérisée en ce que** les surfaces de protection et de guidage (6) des éclisses en forme de U (5) possèdent, dans la direction transversale par rapport à la chaîne flyer (1), une section transversale en forme de cuvette pour le guidage de tuyaux (9).

9. Chaîne flyer (1) selon l'une des revendications précédentes, **caractérisée en ce que** les éclisses en forme de U (5) sont réalisées en matière plastique.

10. Chaîne flyer (1) selon l'une des revendications précédentes, **caractérisée en ce que** les éclisses en forme de U (5') possèdent, dans la zone des surfaces de protection et de guidage (6'), des nervures de renfort (13), qui s'étendent essentiellement dans la direction transversale par rapport à la chaîne flyer (1).
